# EUROPÄISCHE PATENTSCHRIFT

(11) **EP 1 231 996 B1**
(45) Veröffentlichungstag und Bekanntmachung des Hinweises auf die Patenterteilung: **28.05.2003**
(21) Anmeldenummer: 00989849.5
(22) Anmeldetag: 08.11.2000
(51) Int. Cl.: B01D 25/21

(54) **PRESSMEMBRAN AUS EINEM GUMMIELASTISCHEN MATERIAL**
PRESS MEMBRANE FROM A RUBBER-ELASTIC MATERIAL
MEMBRANE-PRESSE REALISEE DANS UN MATERIAU ELASTIQUE DE TYPE CAOUTCHOUC

(30) Priorität: 25.11.1999 DE 19956618
(43) Veröffentlichungstag der Anmeldung: 21.08.2002
(73) Patentinhaber: Outokumpu Oyj, 02201 Espoo (FI)
(72) Erfinder: CLAESSEN, Wilhelm, 52070 Aachen (DE)
(74) Vertreter: Bauer, Dirk, Dipl.-Ing. Dipl.-Kfm.
(86) Internationale Anmeldenummer: EP0011013
(87) Internationale Veröffentlichungsnummer: WO01037962

(56) Entgegenhaltungen:
- EP-A- 0 440 205
- DE-A- 4 119 166
- DE-A- 4 408 388
- GB-A- 2 069 358

## Beschreibung

Die Erfindung betrifft eine Preßmembran aus einem gummielastischen Material für eine Filterplatte einer Filterpresse, wobei die Preßmembran einerseits von der Filterplatte abstützbar ist und andererseits mittels einer Vielzahl noppenförmiger Erhebungen ein parallel verlaufendes Filtertuch abstützt und ein zwischen der Preßmembran und der Filterplatte befindlicher Zwischenraum mit einem Druckmittel beaufschlagbar ist, wodurch die Preßmembran elastisch von der Filterplatte weg und in Richtung einer von dem Filtertuch begrenzten Filterkammer verlagerbar ist, um Preßdruck auf einen sich vor dam Filtertuch aufbauenden Filterkuchen auszuüben, und wobei von der Preßmembran in Bereichen von Stütznocken der Filterplatte senkrecht zu dieser und zu der Preßmembran selbst gerichtete Druckkräfte übertragbar sind, wobei die Preßmembran (9) im Bereich der Stütznocken (6) mit Übertragungsscheiben (12) aus einem im Vergleich zu dem gummielastischen Material der übrigen Preßmembran (9) wesentlich härteren Material versehen ist und die Übertragungsscheiben (12) in das gummielastische Material einvulkanisiert sind.

Eine derartige Preßmembran ist beispielsweise aus der GB 2 069 258 A bekannt. Neben Einlageelementen in Form von Verstärkungsgeweben sind in dieser Druckschrift Übertragungsscheiben in Form von gelöcherten Stahlscheiben beschrieben. Diese Stahlscheiben sind jedoch wesentlich dünner als die Dicke der Preßmembran. Kommt es im Bereich der Stütznocken zu einer Druckbelastung der Membran, so findet beidseitig der Übertragungsscheiben ein Fließen des gummielastischen Membranmaterials statt, so daß es aufgrund von Schubspannungen an der Oberfläche der faktisch nicht dehnbaren Übertragungsscheiben zu Schubspannungen und damit zu einem Abscheren des gummielastischen Materials kommt. Hierdurch entsteht oftmals eine Zerteilung der Preßmembran in mehrere Lagen, wodurch eine fortschreitende Zerstörung der Preßmembran eingeleitet wird.

Die EP 0 440 205 A1 offenbart eine alternative Preßmembran, bei der die Übertragungsscheiben aus zwei zunächst voneinander getrennten Halbscheiben bestehen, die von gegenüberliegenden Seiten an die Preßmembran herangeführt und dort in der Einbauposition mit Hilfe von Schrauben miteinander verbunden werden. Die dauerhafte Verbindung der Übertragungsscheiben mit dem gummielastischen Membranmaterial soll im Wege einer Verklemmung zwischen den beiden miteinander verschraubten Halbscheiben erfolgen. Ein Nachteil dieser bekannten Membranausführung ist darin zu sehen, daß bei einer Zugbelastung auf die Membran innerhalb der Scheibenebene (wie sie beispielsweise bei einer Druckbeaufschlagung der Filterkammer oder des Preßwasserraumes eintritt) die Gefahr besteht, daß das zwischen den Halbscheiben geklemmte Gummimaterial zum Teil herausrutscht und somit die Festigkeit der Verbindung der Übertragungsscheibe verloren geht. Außerdem besteht die Gefahr einer Beschädigung der Gummimembran im Bereich vergleichsweise scharfkantiger Umlaufkanten der über die Membranoberfläche vorstehenden Halbscheibe(n).

Eine weitere Preßmembran ist aus der DE 41 19 166 C2 bekannt. Zur Abdichtung des mit dem Druckmittel beaufschlagbaren Zwischenraums greift die Preßmembran mit einer umlaufenden Randleiste in eine daran angepaßte umlaufende Nut in dem Rahmen der Filterplatte ein. Im Bereich der Stütznocken der Filterplatte ist die Wandstärke der Preßmembran gegenüber den übrigen Bereichen in etwa verdoppelt, wobei in diesen verdickten Bereichen innerhalb des gummielastischen Materials eine Gewebeverstärkung angeordnet ist. Mit dieser Gewebeverstärkung sollen Verformungen, wie sie bei einer hohen Druckbelastung der Membran im Bereich der Stütznocken auftreten, vermieden werden.

Da es sich bei dem für die Preßmembran verwendeten Gummimaterial jedoch um ein im wesentlichen inkompressibles Material handelt, resultiert aus der hohen Druckbelastung der Preßmembran in den vorgenannten Bereichen ein regelrechtes "Fließen" des Gummimaterials, wohingegen die Gewebeverstärkung einer derartigen Fließbewegung des umgebenden Gummimaterials nicht zu folgen vermag. Die Konsequenz hieraus ist eine Auflösung des Verbundes zwischen der Gewebeverstärkung und dem umgebenden Gummimaterial, so daß es an diesen Stellen insbesondere infolge eines mehrachsigen Spannungszustandes zu einer Zerstörung der Preßmembran in Form von Rißbildungen im Gummimaterial kommt.

Des weiteren kommt es infolge der Fließbewegung des Gummimaterials zu einer Relativbewegung zwischen letzterem, den zugeordneten Stütznocken der Filterplatten sowie den zwischen den beiden vorgenannten Bauteilen befindlichen Filtertüchern. Dies führt zum einen zu einem hohen Reibverschleiß an der Gummioberfläche und zum anderen zu einer unzulässig großen Dehnung der Filtertücher, woraus die sehr gefürchteten sogenannten Kreuzrisse im Filtertuchgewebe resultieren können.

Eine andere allgemein bekannte Preßmembran weist im Bereich der Stütznocken Aussparungen auf, so daß sich die Stütznocken gegenüberliegender Filterplatten nur über die beiden dazwischenliegenden Filtertücher aufeinander abstützen. Zu einem Fließen von Gummimaterial und einer Rißbildung in demselben sowie einer durch die Fließbewegung des Gummimaterials hervorgerufenen Überdehnung der Filtertücher kann es bei einer derartigen Konstruktion nicht kommen. Ein Nachteil einer derartigen Preßmembran ist jedoch darin zu sehen, daß die Membran im Bereich der Aussparungen gegenüber der Filterplatte abgedichtet werden muß, um beispielsweise ein Eindringen von Preßwasser auf die Filtratseite zu verhindern. Die für eine derartige zuverlässige Abdichtung erforderlichen Maßnahmen sind aufwendig und verteuern eine auf diesem Prinzip basierende Filterpresse nicht unerheblich.

Der Erfindung liegt die Aufgabe zugrunde, eine Preßmembran so weiterzuentwickeln, daß bei einer Krafteinleitung über die Stütznocken einer Filterplatte sowohl eine Zerstörung der Preßmembran selbst als auch des Filtertuchs vermieden wird. Des weiteren sollen die Herstellkosten für eine derartige Preßmembran gering sein und ein zusätzlicher Abdichtaufwand ausgeschlossen werden.

Ausgehend von einer Preßmembran der eingangs beschriebenen Art, wird diese Aufgabe erfindungsgemäß dadurch gelöst, daß die Übertragungsscheiben (12) mit ihren gegenüberliegenden Ansichtsseiten einen Teil der Oberflächen der Preßmembran (9) bilden, und daß die Oberflächen der Preßmembran (9) im Übergangsbereich von den Übertragungsscheiben (12) zu der übrigen Preßmembran (9) stetig verlaufen.

Das härtere Material im Bereich der Stütznocken verhindert selbst bei großen Druckbeanspruchungen ein Fließen, so daß es in den besonders belasteten Bereichen der Preßmembran weder zu eincr Beschädigung der Membran selbst noch der ebenfalls auf Druck beanspruchten Filtertücher kommen kann.

Da die Preßmembran lediglich im Bereich der Übertragangsscheiben aus einem harten, damit kaum elastischen Material besteht, ist in den übrigen Membranbereichen die erforderliche Elastizität nicht eingeschränkt, da dort wie bei Membranen nach dem Stand der Technik gummielastisches Material Verwendung findet. Im Bereich der Stütznocken ist der Verlust der Elastizität ohne Nachteil, da in diesen Bereichen wegen der Einklemmung der Membran ohnehin keine Verlagerung erfolgen kann.

Der Herstellungsprozeß der erfindungsgemäßen Preßmembran gestaltet sich besonders einfach, da die Übertragungsscheiben in das gummielastische Material einvulkanisiert sind. Außerdem ist dadurch eine sehr zuverlässige Abdichtung zwischen den Übertragungsscheiben und dem sie umgebenden Membranmaterial gewährleistet.

Da die Übertragungsscheiben jeweils einen Teil der gegenüberliegenden Oberflächen der Preßmembran bilden, liegen sie unmittelbar an den Stütznocken bzw. Filtertüchern an, so daß im Kraftübertragungsbereich überhaupt kein gummielastisches Material vorhanden ist.

Da die Oberflächen der Preßmembran im Bereich der Übertragungsscheiben stetig verlaufen, wird die Gefahr örtlicher Materialüberbeanspruchungen, beispielsweise durch scharfe Kanten, vermieden.

Die Erfindung weiter ausgestaltend, ist vorgesehen, daß die Übertragungsscheiben kreisförmig sind und einen Durchmesser besitzen, der geringfügig kleiner ist als der Durchmesser der ebenfalls kreisförmigen Stütznocken. Auf diese Weise wird gewährleistet, daß es in sämtlichen Verformungszuständen der Preßmembran zu keinen unstetigen Verläufen des gummielastischen Materials und infolge dessen zu einer Überbeanspruchung kommt.

Im Hinblick auf die Produktionskosten ist es besonders vorteilhaft, wenn die Übertragungsscheiben aus einem Kunststoffmaterial, vorzugsweise aus Polyamid oder Polypropylen, bestehen.

Alternativ hierzu ist es aber je nach Anwendungsfall auch sinnvoll, wenn die Übertragungsschreiben aus einem metallischen Material, das vorzugsweise korrosionsbeständig ist, bestehen. Die Korrosionsbeständigkeit des Metalls erlaubt in diesen Fällen auch die Verwendung bei der Filtration aggressiver Suspensionen.

Um ein Herauslösen der Übertragungsscheiben aus der Preßmembran auch bei höheren Belastungen auszuschließen, ist vorgesehen, daß zwischen den Übertragungsscheiben und dem umgebenden Material ein Formschluß besteht. Dieser Formsehluß kann vorzugsweise durch mindestens eine in einer Stirnseite der Übertragungsscheiben umlaufende Nut herbeigeführt werden, die beim Herstellungsprozeß der Preßmembran mit gummielastischem Material ausgefüllt wird.

Die Haltbarkeit der Verbindung zwischen den Übertragungsscheiben und dem umgebenden Membranmaterial kann weiter gesteigert werden, wenn der Umfang der Uberuagungsscheiben mit Erhebungen und/oder Vartiefungen - vorzugsweise in Form einer umlaufenden Verzahnung - versehen ist, da hierdurch ein Formschluß erzielt wird.

Die Erfindung wird nachfolgend anhand eines Ausführungsbeispiels einer Preßmembran, die in der Zeichnung dargestellt ist, näher erläutert. Es zeigt:
- Fig. 1: eine Ansicht einer Filterplatte mit zentralem Trübeeinlauf und vier Stütznocken;
- Fig. 2: einen Schnitt entlang der Linie II - II durch die Filterplatte gemäß Fig. 1 und
- Fig. 3: eine Ausschnittsvergrößerung aus Fig. 2 im Bereich zweier Stütznocken.

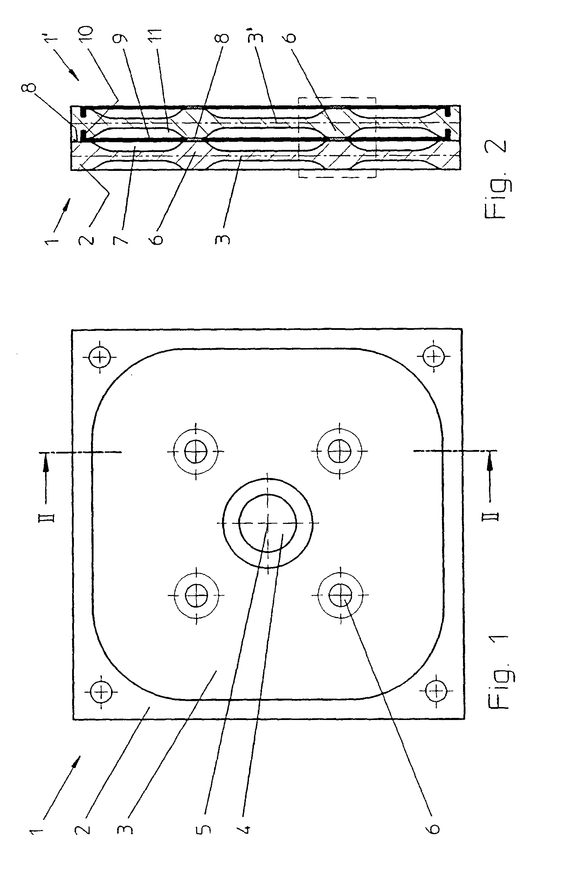

Fig. 1 zeigt in einer Ansicht eine Filterplatte 1, von der eine Mehrzahl parallel zueinander in einer Filterpresse zur Filtration von Suspensionen angeordnet sind. Jede Filterplatte 1 besteht aus einem umlaufenden Rahmen 2 und einem von diesem umschlossenen Plattenspiegel 3. An zentraler Stelle des Plattenspiegels 3 befindet sich ein sogenannter zentraler Trübezulauf 4, der sich nach Art eines Kanals durch sämtliche hintereinander angeordnete Filterplatten 1 erstreckt. In gleichem Abstand um eine Längsachse 5 des Trübezulaufs 4 angeordnet befinden sich Stütznocken 6, die aus dem gegenüber dem Rahmen 2 vertieft angeordneten Plattenspiegel 3 hervorstehen.

Mit Blick auf Fig. 2 ist ersichtlich, daß zwischen zwei benachbarten Filterplatten 1 und 1' eine Filterkammer 7 eingeschlossen ist. Diese Filterkammer entsteht im zusammengepreßten Zustand benachbarter Filterplatten 1 und 1' dadurch, daß der Plattenspiegel 3 gegenüber einer Trennungsebene 8 zwischen aneinanderstoßenden Rahmen 2 zurückversetzt ist.

Außer im Bereich des umlaufenden Rahmens 2 berühren sich die gegenüberliegenden Filterplatten 1 und 1' lediglich noch im Bereich der vier Stütznocken 6.

Die in Fig. 2 rechts abgebildete Filterplatte 1' ist mit einer Preßmembran 9 versehen, die mit Hilfe eines randseitig umlaufenden Dichtrandes 10 in eine angepaßte Nut in den Rahmen 2 der Filterplatte 1' eingreift und im zusammengepreßten Zustand des Filterplattenpakets für eine Abdichtung sowohl eines Zwischenraums 11 als auch der Filterkammer 7 sorgt. Der Zwischenraum 11 sich zwischen der Preßmembran 9 und dem Plattenspiegel 3' der Filterplatte 1' befindet. Dieser Zwischenraum 11 ist mit einem Druckmittel, insbesondere mit Preßwasser, beaufschlagbar.

In Fig. 2 ist die Filterplatte 1 als Kammerplatte und die Filterplatte 1' als Membranplatte im Querschnitt dargestellt. Alternativ hierzu kann jede Filterplatte auf einer Seite als Kammerplatte und auf der gegenüberliegenden Seite als Membranplatte ausgebildet sein. Als weitere Variante können ausschließlich Membranplatten eingesetzt sein.

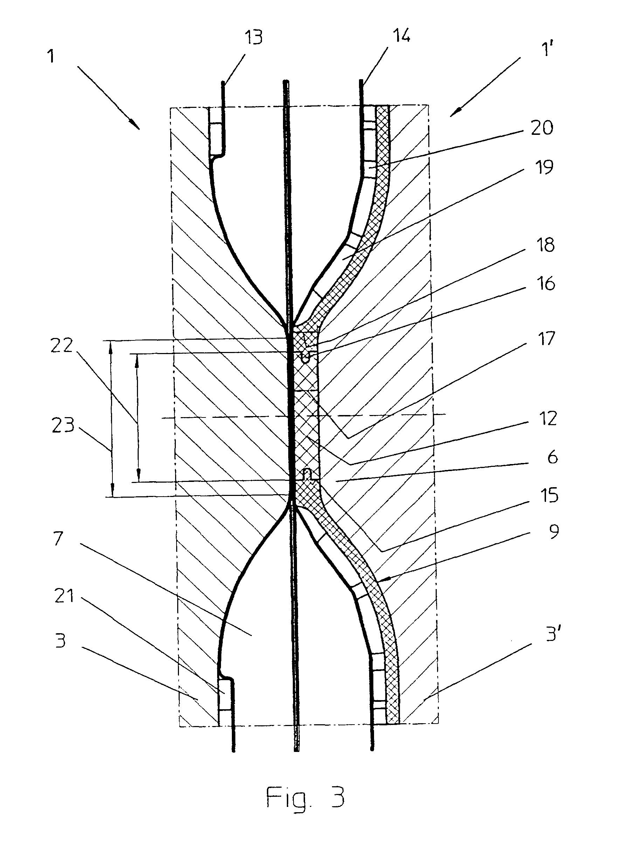

Aus der Ausschnittsvergrößerung gemäß Fig. 3 ergibt sich, daß jeweils im Bereich zweier gegenüberliegender Stütznocken 6 eine aus einem harten Kunststoffmaterial oder einem korrosionsbeständigen Metall bestehende Übertragungsscheibe 12 in die Preßmembran 9 integriert ist. Die Kraftübertragung zwischen zwei gegenüberliegenden Stütznocken 6 erfolgt daher über die Übertragungsscheibe 12 - sowie zwei Filtertücher 13 und 14 - und nicht über das gummielastische Material der übrigen Preßmembran 9.

Zu einer Kraftübertragung zwischen benachbarten Stütznocken 6 kommt es immer dann, wenn in benachbarten Filterkammern 7 unterschiedliche Drücke herrschen. Derartige Differenzdrücke können dadurch entstehen, daß die Zufuhrquerschnitte ungleich groß sind oder daß - beispielsweise nach einem Filtertuchwechsel in einer Kammer - der Strömungswiderstand durch ein derartiges Filtertuch vergleichsweise klein ist, wodurch der Druckaufbau in der betroffenen Kammer verzögert wird. Aufgrund der großen Fläche der Plattenspiegel 3, resultierten bereits aus vergleichsweise geringen Differenzdrücken in benachbarten Filterkammern 7 erhebliche Kräfte, die ohne eine gegenseitige Abstützung benachbarter Filterplatten 1, 1' über die Stütznocken 6 zu einer unzulässig großen Verformung der Filterplatten 1, 1' im Bereich der Plattenspiegel 3, 3' führen würden.

Aus Fig. 3 läßt sich des weiteren entnehmen, daß die Übertragungsscheibe 12 mit einer in ihrer Stirnseite 15 umlaufenden U-förmigen Nut 16 versehen ist. Die Übertragungsscheibe 12 ist in die Preßmembran 9 einvulkanisiert; wobei gummielastisches Material die Nut 16 vollständig ausfüllt. Außerdem ist der Umfang der Übertragungsscheibe 12 mit einer nicht sichtbaren umlaufenden Verzahnung versehen. Die Dicke 17 der Übertragungsscheibe 12 entspricht der Dicke 18 der Preßmembran 9 im angrenzenden Bereich, so daß sich ein stetiger Übergang auf beiden Oberflächen der Preßmembran 9 ergibt.

Die Preßmembran 9 ist an ihrer dem Filtertuch 14 zugewandten Oberseite mit einer Vielzahl regelmäßig verteilter zylinderförmiger Noppen 19 versehen, die aufgrund der dazwischen befindlichen Freiräume 20 einen Ablauf des durch das Filtertuch 14 hindurchgetretenen Filtrats gestatten.

In gleicher Weise ist der Plattenspiegel 3 der Filterplatte 1 mit einer Vielzahl von Noppen 21 versehen, die ebenfalls einen ungehemmten Ablauf des Filtrats erlauben.

Schließlich ist in Fig. 3 noch dargestellt, daß der Durchmesser 22 der Übertragungsscheiben 12 geringfügig kleiner ist als ein Durchmesser 23 der kegelstrumpfförmigen Stütznocken 6. Hierdurch wird bewirkt, daß unabhängig von dem aktuellen Verformungszustand der gummielastischen Bereiche der Preßmembran 9 eine von Sprüngen oder Knicken freie Anlage der Preßmembran in den die Übertragungsscheiben 12 umgebenden gummielastischen Bereichen sichergestellt ist. Nach Abschluß des Filtrations- und eventuellen Waschvorgangs des sich in der Filterkammer 7 gebildeten Filterkuchens wird die Preßmembran 9 durch Druckbeaufschlagung von der Seite der Filterplatte 1' her nach links ausgelenkt, wobei der Filterkuchen zusammengepreßt und weiter entwässert wird.

## Patentansprüche

1. Preßmembran (9) aus einem gummielastischen Material für eine Füterplatte (1') einer Filterpresse, wobei die Preßmembran (9) einerseits von der Filterplatte (1') abstützbar ist und andererseits mittels einer Vielzahl noppenförmiger Erhebungen ein parallel verlaufendes Filtertuch (14) abstützt und ein zwischen der Preßmembran (9) und der Filterplatte (1') befindlicher Zwischenraum (11) mit einem Druckmittel beaufschlagbar ist, wodurch die Preßmembran (9) elastisch von der Filterplatte (1') weg und in Richtung einer von dem Filtertuch (14) begrenzten Filterkammer (7) verlagerbar ist, um Preßdruck auf einen sich vor dem Filtertuch (14) aufbauenden Filterkuchen auszuüben, und wobei von der Preßmembran (9) in Bereichen von Stütznocken (6) der Filterplatte (1, 1') senkrecht zu dieser und der Preßmembran (9) selbst gerichtete Druckkräfte übertragbar sind, wobei die Preßmembran (9) im Bereich der Stütznocken (6) mit Übertragungsscheiben (12) aus einem im Vergleich zu dem gummielastischen Material der übrigen Preßmembran (9) wesentlich härteren Material versehen ist und die Übertragungsscheiben (12) in das gummielastische Material einvulkanisiert sind, **dadurch gekennzeichnet, daß** die Übertragungsscheiben (12) mit ihren gegenüberliegenden Ansichtsseiten einen Teil der Oberflächen der Preßrnembran (9) bilden, und daß die Oberflächen der Preßmembran (9) im Übergangsbereich von den Übertragungsscheiben (12) zu der übrigen Preßmembran (9) stetig verlaufen.

2. Preßmembran nach Anspruch 1, **dadurch gekennzeichnet, daß** die Übertragungsscheiben (12) kreisförmig sind und einen Durchmesser (22) besitzen. der geringfügig kleiner als der Durchmesser (23) der ebenfalls kreisförmigen Stütznocken (6) ist.

3. Freßmembran nach Ansprach 1 oder 2, **dadurch gekennzeichnet, daß** die Übertragungsscheiben (12) aus einem Kunststoffmaterial, vorzugsweise aus Polyamid oder Polypropylen, bestehen.

4. Preßmembran nach Anspruch 1 oder 2, **dadurch gekennzeichnet, daß** die Übertragungsscheiben (12) aus metallischen Material, das vorzugsweise korrosionsbeständig ist, bestehen.

5. Preßmembran nach einem der Ansprüche 1 bis 4, **dadurch gekennzeichnet, daß** zwischen den Übertragungsscheiben (12) und dem umgebenden Material ein Formschluß besteht.

6. Preßmembran nach Anspruch 5, **dadurch gekennzeichnet, daß** die Übertragungsscheiben (12) mindestens eine stirnseitig umlaufende Nut (16) besitzen, die beim Herstellungsprozeß der Preßmembran (9) mit gummielastischem Material ausgefüllt wird.

7. Preßmembran nach einem der Ansprüche 1 bis 6, **dadurch gekennzeichnet, daß** die Übertragsscheiben an ihrem Umfang mit Erhebungen und/oder Vertiefungen versehen sind.

8. Preßmembran nach Anspruch 7, **dadurch gekennzeichnet, daß** die Übertragungsscheiben an ihrem Umfang mit einer umlaufenden Verzahnung versehen sind.

## Claims

1. A press membrane (9) made of a rubber-elastic material for a filter plate (1') of a filter press, the press membrane (9) being supportable on one side by the filter plate (1') and supporting on the other side a filter cloth (14) disposed parallel to said press membrane (9) by means of a multiplicity of pillar-like elevations, and a cavity (11) located between the press membrane (9) and the filter plate (1') being chargeable with a pressurised medium, whereby the press membrane (9) is elastically displaceable away from the filter plate (1') and towards a filter chamber (7) delimited by the filter cloth (14) in order to exert compressive force on a filter cake building up in front of the filter cloth (14), and compressive forces directed perpendicularly to the filter plate (1,1') and to the press membrane (9) itself being transmissible by the press membrane (9) in areas of support lobes (6) of the filter plate (1,1'), the press membrane (9) being provided in the area of the support lobes (6) with transmitting plates (12) made of a material which is substantially harder in comparison to the rubber-elastic material of the remaining press membrane (9) and the transmitting plates (12) being vulcanised into the rubber-elastic material, **characterised in that** the transmitting plates (12) form with their opposed front faces a part of the surfaces of the press membrane (9), and **in that** the surfaces of the press membrane (9) extend continuously in the transitional area from the transmitting plates (12) to the remaining press membrane (9).

2. A press membrane according to Claim 1, **characterised in that** the transmitting plates (12) are circular and have a diameter (22) which is slightly smaller than the diameter (23) of the likewise circular support lobes (6).

3. A press membrane according to Claim 1 or 2, **characterised in that** the transmitting plates (12) consist of a plastics material, preferably polyamide or polypropylene.

4. A press membrane according to Claim 1 or 2, **characterised in that** the transmitting plates (12) consist of metallic material which is preferably corrosion-resistant.

5. A press membrane according to any one of claims 1 to 4, **characterised in that** there is a positive fit between the transmitting plates (12) and the surrounding material.

6. A press membrane according to Claim 5, **characterised in that** the transmitting plates (12) have in their edge faces at least one continuous groove (16) which is filled with rubber-elastic material during the manufacturing process of the press membrane (9).

7. A press membrane according to any one of claims 1 to 6, **characterised in that** the transmitting plates are provided at their perimeter with elevations and/or recesses.

8. A press membrane according to Claim 7, **characterised in that** the transmitting plates are provided at their perimeter with a continuous denticulation.

## Revendications

1. Membrane-presse (9) en une matière ayant l'élasticité du caoutchouc pour un plateau (1') d'un filtre-presse, la membrane-presse (9) pouvant être soutenue d'une part par le plateau (1') de filtre et soutenant, d'autre part, au moyen d'une pluralité de saillies en forme de bouton, un tissu (14) filtrant s'étendant parallèlement et un intervalle (11) se trouvant entre la membrane presse (9) et le plateau (1') de filtre pouvant être alimenté en un fluide sous pression, de sorte que la membrane-presse (9) puisse être déplacée élastiquement en s'éloignant du plateau (1') de filtre et en allant en direction d'une chambre (7) de filtre délimitée par le tissu (14) filtrant pour appliquer une pression de pressage sur un gâteau de filtre qui s'accumule devant le tissu (14) filtrant, des forces de pression pouvant être transmises par la membrane-presse (9) dans des zones de bossages (6) d'appui du plateau (1, 1') de filtre-presse en étant dirigées perpendiculairement à celui-ci et à la membrane-presse (9) elle-même, la membrane-presse (9) étant munie dans la zone des bossages (6) d'appui de disques (12) de transmission en une matière sensiblement plus dure que la matière ayant l'élasticité du caoutchouc du reste de la membrane-presse (9) et les disques (12) de transmission étant vulcanisés dans la matière ayant l'élasticité du caoutchouc, **caractérisée en ce que** les disques (12) de transmission forment, par leurs côtés en regard opposés, une partie des surfaces de la membrane-presse (9) et **en ce que** les surfaces de la membrane-presse (9) s'étendent constamment dans la partie de transition des disques (12) de transmission au reste de la membrane-presse (9).

2. Membrane-presse suivant la revendication 1, **caractérisée en ce que** les disques (12) de transmission sont circulaires et ont un diamètre (22) qui est légèrement plus petit que le diamètre (23) des bossages (6) d'appui également circulaires.

3. Membrane-presse suivant la revendication 1 ou 2, **caractérisée en ce que** les disques (12) de transmission sont en une matière plastique, de préférence en polyamide ou en polypropylène.

4. Membrane-presse suivant la revendication 1 ou 2, **caractérisée en ce que** les disques (12) de transmission sont en une matière métallique qui, de préférence, résiste à la corrosion.

5. Membrane-presse suivant l'une des revendications 1 à 4, **caractérisée en ce qu'**il y a une complémentarité de forme entre les disques (12) de transmission et la matière qui les entoure.

6. Membrane-presse suivant la revendication 5, **caractérisée en ce que** les disques (12) de transmission ont au moins une gorge (16) faisant le tour du côté frontal, qui est emplie, lors de l'opération de fabrication de la membrane-presse (9), de matière ayant l'élasticité du caoutchouc.

7. Membrane-presse suivant l'une des revendications 1 à 6, **caractérisée en ce que** les disques de transmission sont munis sur leur pourtour de saillies et/ou de cavités.

8. Membrane-presse suivant la revendication 7, **caractérisée en ce que** les disques de transmission sont munis sur leur pourtour d'une denture faisant le tour.
